(19) Europäisches Patentamt
European Patent Office
Office européen des brevets

(11) **EP 2 680 063 A1**

(12) **EUROPEAN PATENT APPLICATION**

(43) Date of publication:
**01.01.2014 Bulletin 2014/01**

(51) Int Cl.:
***G02F 1/1333*** (2006.01)   ***H05K 5/02*** (2006.01)

(21) Application number: **13173495.6**

(22) Date of filing: **25.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.06.2012 TW 101122611**

(71) Applicant: **InnoLux Corporation
Chu-Nan, Miao-Li 350 (TW)**

(72) Inventors:
• **Tsai, Yung-Yu
Chu-Nan, Miao-Li 350 (TW)**
• **Wang, Ming-Tien
Chu-Nan, Miao-Li 350 (TW)**
• **Huang, Yung-Shen
Chu-Nan, Miao-Li 350 (TW)**
• **Tsai, Chin-Tu
Chu-Nan, Miao-Li 350 (TW)**

(74) Representative: **Viering, Jentschura & Partner
Kennedydamm 55 / Roßstrasse
40476 Düsseldorf (DE)**

(54) **Display device and method of assembling the same**

(57)    A display device (100, 200, 300, 400) includes a display panel (120), a backlight module (170, 270), a first frame set (110, 210) and at least one attachment layer (140). The first frame set (110, 210) has at least one supporting bar (111, 211), and the supporting bar (111, 211) has a first wall (111b, 211b, 311b) and a supporting portion (111a, 211a, 311a) connecting to the first wall (111b, 211b, 311b). The supporting portion (111a, 211a, 311a) is located between the display panel (120) and the backlight module (170, 270) and has a supporting face (S1, S3) and a bottom face (S2, S4) opposing the supporting face (S1, S3). The display panel (120) is disposed above the supporting face (S1, S3) while the first wall (111b, 211b, 311b) extends from the bottom toward the backlight module (170, 270). The attachment layer (140) bonds the display panel (120) and supporting face (S1, S3).

FIG. 1B

EP 2 680 063 A1

FIG.2B

**Description**

BACKGROUND

1. Field of the Invention

The instant disclosure relates to a display device and a method of assembling the same; in particular, to a display device including backlight module and a method of assembling the same.

2. Description of Related Art

A conventional liquid crystal display (LCD) device includes a liquid crystal panel, a backlight module, a front frame and a bezel. The liquid crystal panel is disposed between the front frame and the backlight module. The liquid crystal panel has a display plane with a display area. The front frame covers the periphery of the display plane and exposes the display area.

Generally, the bezel usually surrounds the liquid crystal panel and covers the front frame along the periphery of the display plane. Hence the front frame does not appear. Additionally, the bezel has specifically designed appearance to attract prospective consumers, so that the bezel not only provides protection to the liquid crystal panel but also effects the aesthetic appearance.

SUMMARY OF THE INVENTION

The instant disclosure provides a display device having a first frame set for supporting a display panel.

According to one exemplary embodiment of the instant disclosure, the display device includes a backlight module, a display panel, a first frame set and at least one attachment layer. The display panel has a display area and a non-display area. The first frame set includes at least one supporting bar. The supporting bar has a first wall and a supporting portion connecting to the first wall. The supporting portion is located between the display panel and the backlight module. Furthermore, the supporting portion has a supporting face and a bottom face opposing the supporting face. The display panel is disposed above the supporting face while the first wall extends toward the backlight module from the bottom face. The attachment layer bonds the display panel and the supporting face.

The instant disclosure also provides a method of assembling the display device.

According to another exemplary embodiment of the instant disclosure, the method includes the connection between at least one supporting bar and a backlight module. The supporting bar has a first wall and a supporting portion connecting to the first wall. The supporting portion has a supporting face. Subsequently, at least one attachment layer is formed on the supporting face. Then a display panel is disposed on the attachment layer to allow the attachment layer to bond the display panel and the supporting portion.

In summary, the display panel attaches to the first frame set via the attachment layer. Therefore the first frame set can support the display panel without covering the display area and the non-display area. Compared to the conventional technique, the instant disclosure improves the design flexibility to permit diverse appearances.

In order to further understand the instant disclosure, the following embodiments are provided along with illustrations to facilitate the appreciation of the instant disclosure; however, the appended drawings are merely provided for reference and illustration, without any intention to be used for limiting the scope of the instant disclosure.

BRIEF DESCRIPTION OF THE DRAWINGS

Fig. 1A is a schematic top view of a display device in accordance with a first embodiment of the instant disclosure.

Fig. 1B is a schematic cross-sectional view along a line P-P of Fig. 1A.

Fig. 1C is a schematic top view of the disassembled display device in Fig. 1A.

Fig. 2A is a schematic top view of a display device in accordance with a second embodiment of the instant disclosure.

Fig. 2B is a schematic cross-sectional view along a line Q-Q of Fig. 2A.

Fig. 2C is a schematic top view of the disassembled display device in Fig. 2A.

Fig. 3 is a schematic top view of a display device in accordance with a third embodiment of the instant disclosure.

Fig. 4 is a schematic top view of a display device in accordance with a fourth embodiment of the instant disclosure.

Figs. 5A and 5B are schematic diagrams showing steps of assembling the display device in Fig. 2A.

DETAILED DESCRIPTION OF THE PREFERRED EMBODIMENTS

The aforementioned illustrations and following detailed descriptions are exemplary for the purpose of further explaining the scope of the instant disclosure. Other objectives and advantages related to the instant disclosure will be illustrated in the subsequent descriptions and appended drawings.

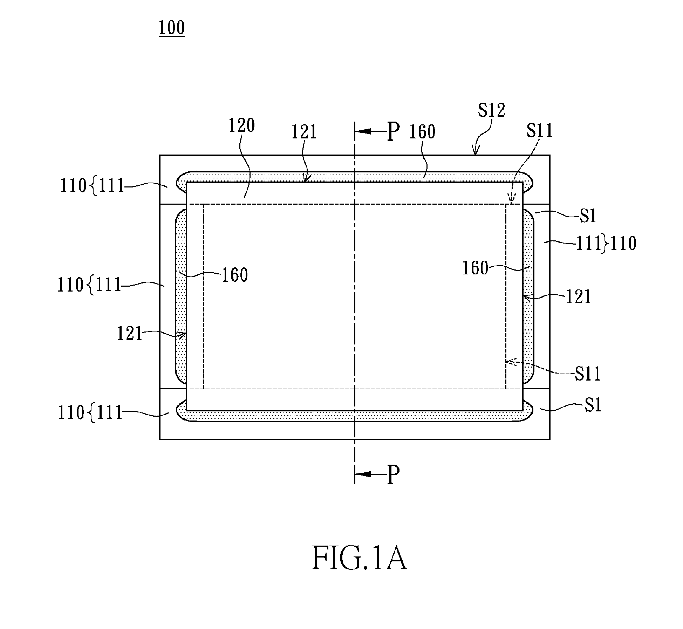

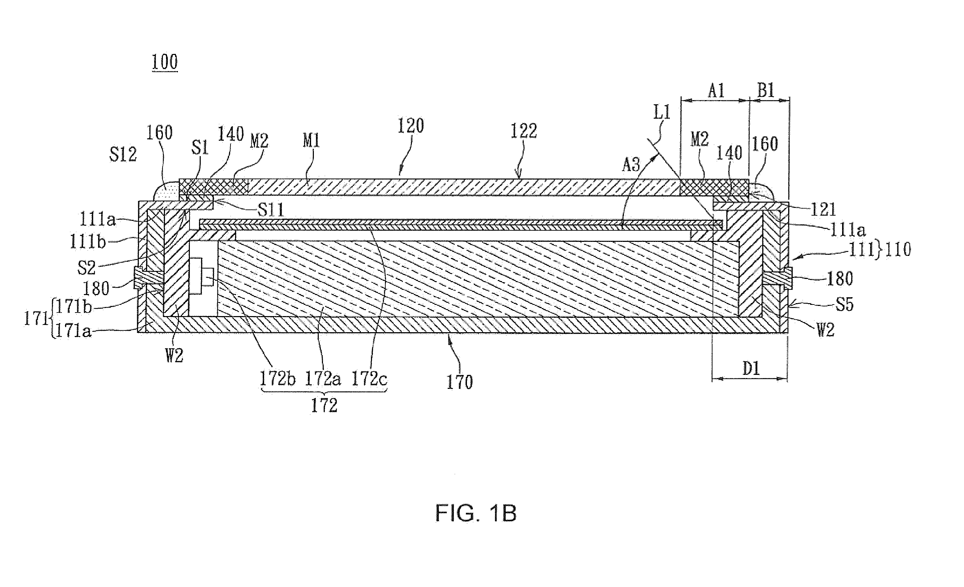

Fig. 1A is a schematic top view of a display device in accordance with a first embodiment of the instant disclosure. Fig. 1B is a schematic cross-sectional view along a line P-P of Fig. 1A. Please refer to Figs. 1A and 1B. A display device 100 includes a display panel 120, a backlight module 170, a first frame set 110 and a plurality of attachment layer 140. The display panel 120 is disposed above the backlight module 170, and the first frame set 110 is disposed at the periphery of the back module 170. The periphery refers to, for example, the outline of the backlight module 170. The backlight module 170 and the first frame set 110 connect to each other.

The first frame set 110 includes at least one supporting bar 111 connecting to the backlight module 170. Take Fig. 1A for example. The first frame set 110 includes four supporting bars 111. However, in other embodiments, the first frame set 110 may includes one, two, three, four, or more supporting bars 111. Each supporting bar 111 has a first wall 111b and a supporting portion 111a connecting to the first wall 111b. The supporting portion 111a supports and connects to the display panel 120.

The display panel 120 has a display area M1 and a non-display area M2. The non-display area M2 surrounds the display area M1 along the circumferential portion thereof. The image is output to the display panel 120 and shown in the display area M1. Furthermore, the display panel 120 can be a liquid crystal panel yet the instant disclosure is not limited thereto.

The length of the supporting bar 111 may vary in order to suit for a different dimension of display panel 120. In addition, the display panel 120 can have different shapes. For example, the shape of the display panel 120 can be rectangular, square, triangular or hexagonal. The supporting bars 111 exhibits the flexibility for being modified accordingly.

For example, when the display panel 120 is shaped rectangular, two of the four supporting bars 11 are lengthwise equal yet the two pairs do not have the same length as shown in Fig. 1A. That is to say the first frame set 110 has supporting bars 111 in different lengths. Of course, when the display panel 120 is shaped as a square or a regular triangle, the first frame set 110 has supporting bars 111 in uniform length.

Please refer to Fig. 1B. Each supporting portion 111a has a supporting face S1 and a bottom face S2 opposing the supporting face S1. The supporting face S1 has an inner edge S11 and an outer edge S12 opposing the inner edge S11. The first wall 111b extends from the bottom face S2 toward the backlight module 170 and approaches the backlight module 170. Furthermore, the first wall 111b has an external face S5 connecting to the outer edge 12 to cause that the first wall 111b does not jut out of the supporting face S1.

The first wall 111b connects the backlight module 170 by fasteners and the supporting bars 111 therefore connecting to the backlight module 170. Specifically, as shown in Fig. 1B, display device 100 utilizes a fastener 180 to connect the first wall 111b and the backlight module 170. The fastener 180 can be a screw. In other embodiments, the secure means between the first wall 111b and backlight module 170 can be tapes or tenon and the instant disclosure is not limited thereto.

The display panel 120 is disposed above the supporting face S1. The display panel 120 has a side plane 121 and a plane 122 while the display area M1 is exposed from the plane 122. Since the shape of the display panel 120 is not restricted to the instant embodiment, the number of the side plane 121 is not limited either. Moreover, the display panel 120 covers the inner edge S11 whereas the side plane 121 is located between the inner edge S11 and the outer edge S12. Thus the display panel 120 does not cover the outer edge S12. In other words, the display panel 120 partially covers the supporting face S1.

The display panel 120 can be fastened above the first frame set 110 by the plurality of attachment layers 140. The attachment layers 140 cover the supporting face S1 and allow adhesion between the display panel 120 and supporting face S1. The attachment layer 140 can be solid adhesives, liquid adhesives or colloid adhesives. The solid adhesives can be, for example, double-sided tape while the colloid adhesive can be such as ultra violet curable adhesive.

Additionally, the display device 100 includes a plurality of fixed adhesion bodies 160. The fixed adhesion bodies 160 are disposed on the supporting face S1 to allow attachment between the side plane 121 and supporting face S1. The addition of the fixed adhesion bodies 160 enhances the connection between the display panel 120 and the first frame set 110. Moreover, the fixed adhesion bodies 160 may be distributed along one side of the side plane 121. The shape of the fixed adhesion bodies 160 can be a bar (as shown in fig. 1A) or a dot.

It is worth mentioned that in the first embodiment, the number of the fixed adhesion body 160 is more than one. However, in other embodiments, the number of the fixed adhesion body 160 may be a single one. In addition, the fixed adhesion body 160 may be an optional element of the display device 100 depending on product design. In short, the number and shape of the fixed adhesion body 160 shown in Figs. 1A and 1B are exemplary embodiment and the instant disclosure is not limited thereto.

Please refer to Fig. 1B. When the display panel 120 and first frame set 110 are bonded, the bonding there-between can be maintained or enhanced if the dimension of the display device 100 satisfies the following equation:

$$0.35 \le \frac{D}{A+B} \le 0.75$$

In the above equation, A refers to a distance A1 between the side plane 121 and display area M1. B refers to a distance B1 between the side plane 121 and outer edge S12. D refers to a width D1 measured from the inner edge S11 to outer edge S12. Furthermore, the distance A1 is approximately equal to the distance measured from the non-display area M2 to the boundary of the display area M1.

The backlight module 170 includes a seat 171 and a light assembly 172. The backlight module 170 is partially enclosed by the supporting portion 111a and the first wall 111b. The seat 171 connects the first wall 111b by, for example, fasteners, tenon or adhesives (such as tapes or liquid glue).

The seat 171 includes a shield 171a and a holder 171b combining with the shield 171a. The light assembly 172 has a light guide plate 172a, a plurality of optical film 172c and a light source 172b. The optical film 172c is disposed above the light guide plate 172a and on the holder 171b, as shown in Fig. 1B.

In addition, the boundary between the display area M1 and non-display area M2 is on a reference plane L1 where the edge of the optical film 172c also shares. The included angle A3 between the reference plane L1 and optical film 172c is approximately 25° to 50°. In the first embodiment, the included angle A3 is 45°. The supporting portion 111a may stretch further toward the reference plane L1 yet not exceeding. The holder 171b has a second frame set W2. Each side of the second frame set W2 can be interconnected or separate. The second frame set W2 is disposed between the first frame set 110 and light assembly 172.

In the instant embodiment, the backlight module 170 is a side type backlight module. Please refer to Fig. 1B again. The light assembly 172 is arranged underneath the arm of the holder 171b whereas the optical film 172c is disposed above the arm of the holder 171b. In other words, the light guide plate 172a and light source 172b are in different compartments defined by the arm of the holder 171b. The number of the optical films 172c shown Fig. 1B can be a single one and the instant disclosure is not restricted thereto.

The light source 172b is a light-emitting diode (LED) in the first embodiment while the light source 172b can be cold-cathode fluorescent lamps (CCFLs) and the instant disclosure is not limited thereto.

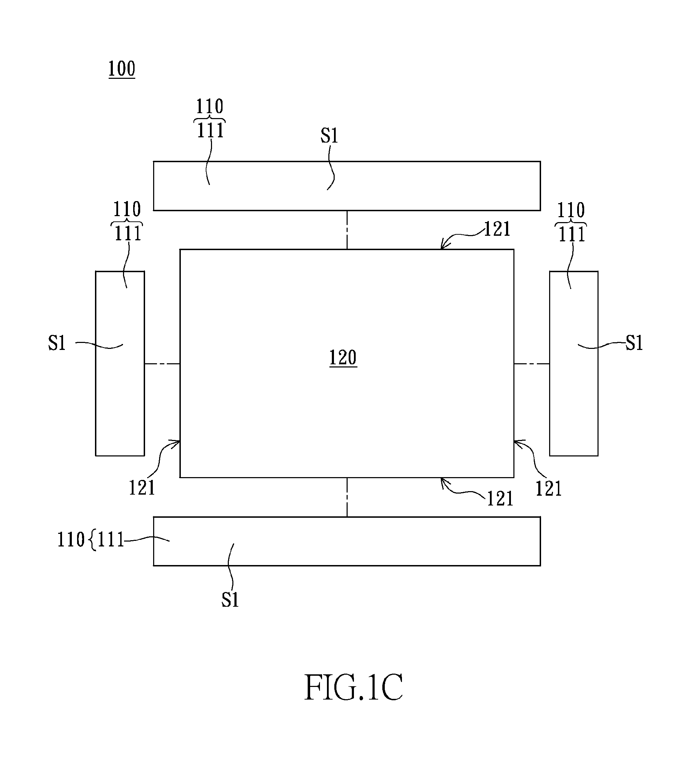

Fig. 1C is a schematic top view of the disassembled display device in Fig. 1A. The supporting bars 111 and display panel 120 of the device 100 are shown in Fig. 1C. Please refer to Fig. 1C. The supporting bars 111 surround the periphery of the display panel 120, and the supporting bars 111 connect to the display panel 120. The supporting bars 111 shown in Fig. 1C are separate from one another and cooperatively surround the periphery of the display panel 120.

However, in other embodiments, at least two of the supporting bars 111 of the first frame set 110 are interconnected. For example, the four supporting bars 111 are interconnected to form a rectangular frame of the first frame set 110. Alternatively, three supporting bars 111 are interconnected to form a U-shaped frame while a single supporting bar 111 is separate from the others. Further still, two supporting bars 111 are interconnected to form an L-shaped frame. It is worth mentioned that the separate supporting bars 111 shown in Figs. 1A, 1B and 1C are exemplary embodiment and the instant disclosure is not limited thereto.

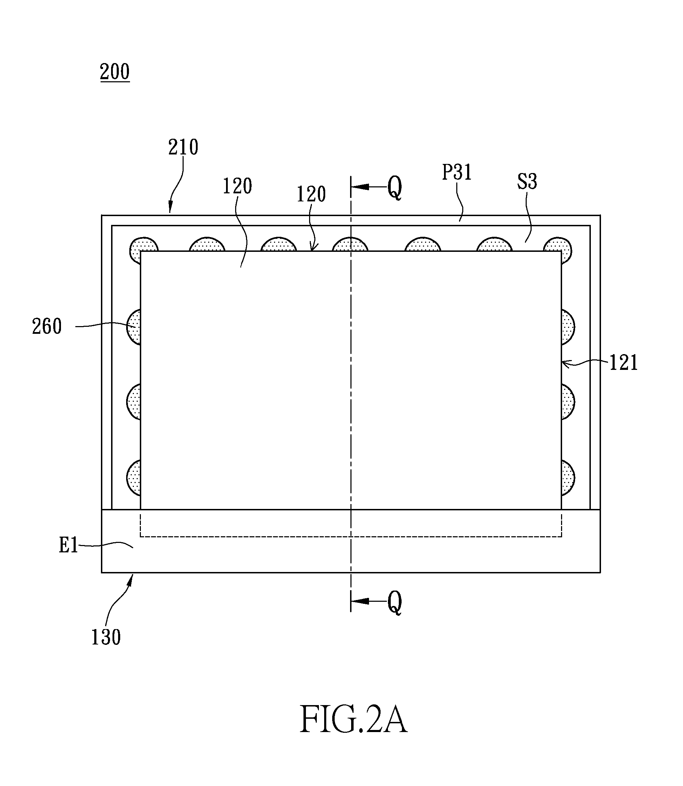

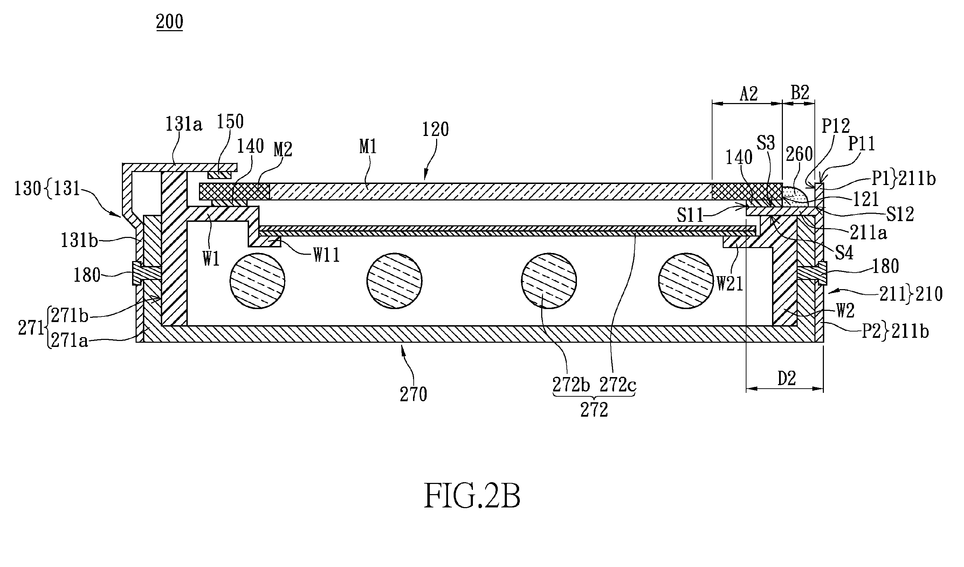

Fig. 2A is a schematic top view of a display device in accordance with a second embodiment of the instant disclosure. Fig. 2B is a schematic cross-sectional view along a line Q-Q in Fig. 2A. The second embodiment shows a display device 200. The display device 200 is formed in a substantially identical manner with the first embodiment, display device 100. For example, the first and second display devices 100, 200 include display panel 120. However, the difference between the first and second display devices 100, 200 is further described while the specifics of same are not repeated herein.

Please refer to Figs. 2A and 2B. The display device 200 includes backlight module 270. The backlight module 270 is a direct type backlight module different from the first embodiment.

Please refer to Fig. 2B. The backlight module 270 includes a light assembly 272. The light assembly 272 has a plurality of optical films 272c and a plurality of light sources 272b. However, the light guide plate 172a may be absent from the light assembly 272.

In addition, in the second embodiment, the plurality of light sources 272b can be CCFLs. The number of the light sources 272b can be a single one as well. LEDs can also be used as the light sources 272b (as shown in Fig. 1B). The number and type of the light sources 272b in the second embodiment are not intended to limit the instant disclosure to that as illustrated and described herein.

The frame set 271 also includes the shield 271a and a holder 271b combining with the shield 271a. The holder 271b further includes at least one supporting member W1. The supporting member W1 supports the display panel 120. Specifically, the attachment layer 140 covers the surface of the supporting member W1 to allow the bonding between the supporting member W1 and the display panel 120. Hence the display panel 120 is fixed on the supporting member W1. That is to say the holder 271b is able to support the display panel by the supporting member W1.

It is worth mentioned that supporting member W1 may further include a first film supporting portion W11. The second frame set W2 may have a second film supporting portion W21. Accordingly, the optical film 272c contacts both the first film supporting portion W11 and second film supporting portion W21. However, the instant disclosure is not restricted to the design of the supporting member and second frame set.

Furthermore, besides the first frame set 210, the display device 200 includes an assembly frame set 130. Please refer to Fig. 2A. For example, the first frame set 210 includes three supporting bars 211, and the assembly frame set 130 includes an assembly bar 131. The first frame set 210 and assembly frame set 130 cooperatively surround the backlight module 270. The assembly frame set 130 connects to the backlight module 270.

In Fig. 2A, the assembly frame set 130 includes only one assembly bar 131. However, in other embodiments, the assembly frame set 130 may include two or more assembly bars 131. The assembly bars 130 may be interconnected or separate from one another. Note that the assembly bar 131 may be replaced by supporting bars 211. That is to say the absence of the assembly frame set 130 in the display device 200 is acceptable.

The supporting bar 211 includes a first wall body 211b and a supporting portion 211a connecting the first wall body 211b. Each supporting portion 211a has a supporting face S3 and a bottom face opposing thereto. The supporting face S3 supports the display panel 120 and connects thereto.

The upper portion P1 of the first wall 211b juts the supporting face S3. In other words, the upper portion P1 is a bump projecting from the supporting face S3. The upper portion P1 has a top face P11 and an inner flat face P12. The top face P11 can be planar or curved. The inner flat face P12 connects the supporting face S3. Specifically, the inner flat face P12 meets the supporting face S3 along a line, which is the outer edge S12. In addition, the top face P11 can be perpendicular to the inner flat face P12.

The upper portion P1 juts out of the supporting face S3 and therefore the upper portion P1 serves the job of blocking the fixing adhesive 260. In the presence of the upper portion P1, the adhesive is prevented from falling off and the adhesion quality is greatly enhanced. Additionally, in the second embodiment, the top face P11 of the supporting bar 211 is flush with the plane 122 of the display panel 120 substantially. That is to say the top face P11 and the plane 122 are substantially co-planar.

In addition, the upper portion P1 may have specialized appearance to achieve aesthetic purpose by product design. For example, the upper portion P1 can have notched or waved wall. Compared to prior art, the display device 200 may exclude an aesthetic frame and the first frame set 210 can provide the same purpose to attract prospective consumers. Thus the supporting bars 211 can not only support the display panel 120, but also serve the job as the aesthetic frame to replace the conventional aesthetic frame.

Please refer to Fig. 2B. When the display panel 120 and the first frame set 210 bond, the bond strength there-between is maintained or furthermore enhanced by satisfying the following equation:

$$0.35 \le \frac{D}{A+B} \le 0.8$$

In the above equation, A refers to a distance A2 between the side plane 121 and display area M1. B refers to a distance B2 between the side plane 121 and outer edge S12. D refers to a width D2 measured from the inner edge S11 to the outer edge S12. Furthermore, the distance A2 is approximately equal to the distance measured from the non-display area M2 to the boundary of the display area M1.

The assembly bar 131 includes a second wall 131b and a top cover 131a. The top cover 131a extends from the top of the second wall 131b toward the display panel 120 and shields part of the display panel 120. The bottom of the second wall 131b extends toward the backlight module 270 and the fasteners 180 are used to connect the backlight module 270 and the second wall 131b. Moreover, the number and length of the assembly bars 131 may vary to suit different display panel 120 dimensions.

In addition, the display device 200 includes one or more buffer layer 150. The buffer layer 150 is attached underneath the top cover 131a and located between the display panel 120 and the top cover 131a. The buffer layer 150 attenuates the crash between the display panel 120 and the top cover 131a. The buffer layer 150 can be made of foam tape or the like and the instant disclosure is not limited thereto.

Please refer to Figs. 2A and 2B. The display panel 120 can be disposed above the first frame set 210 via a plurality of fixing adhesives 260. The fixing adhesives 260 are disposed on the supporting face S3 and bond the side plane 121 and the supporting face S3. The fixing adhesives 260 can be shaped to dots and distributed along the side plane 121. The fixing adhesives 260 are made of the same material as the fixing adhesives 160 in the first embodiment. The fixing adhesives 260 can be absent in the display device 200 and the instant disclosure is not restricted thereto.

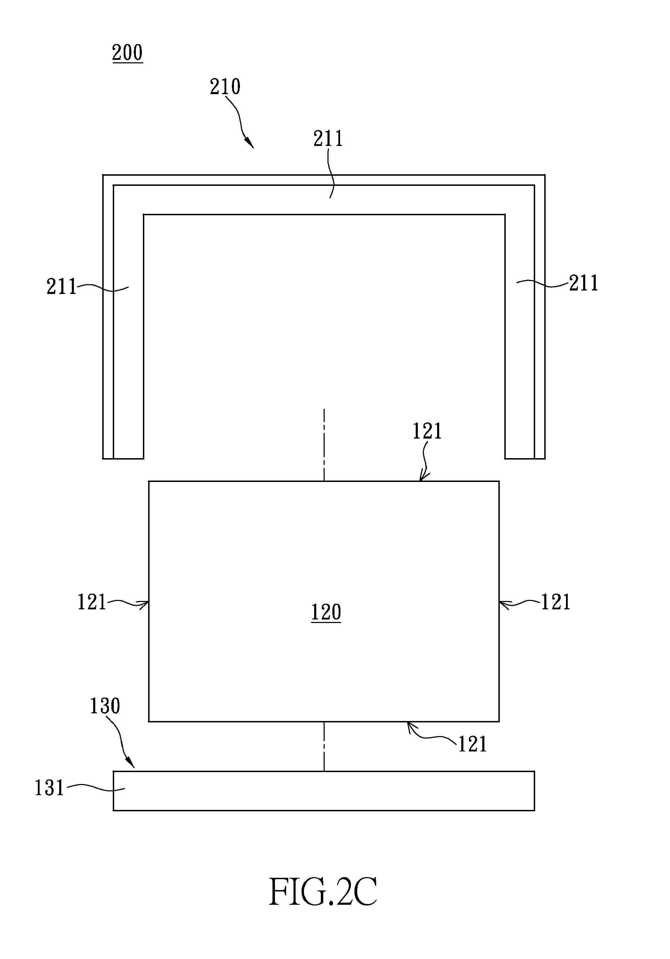

Fig. 2C is a schematic top view of the disassembled display device in Fig. 2A showing the supporting bars 211 and the display panel 120 of the display device 200. Please refer to Fig. 2C. The first frame set 210, assembly frame set 130 and display panel 120 are shown in Fig. 2C. The first frame set 210 differs from the first frame set 110 by the supporting bars 211. The three supporting bars 211 are interconnected and form a U-shaped frame. The first frame set 210 surrounds three continuous side planes 121 of the display panel 120 and connects the display panel 120. The other side plane 121 of the display panel 120 corresponds to the assembly frame set 130. The frame set 130 includes at least one assembly bar 131.

It is worth mentioned that, as shown in fig. 2C, the first frame set 210 and assembly frame 130 are separate elements yet cooperatively surround the periphery of the display panel 120 to form a frame. However, in other embodiments, the first frame set 210 and assembly frame set 130 can be interconnected to form a frame and the instant disclosure is not limited thereto.

In the second embodiment, the number of the assembly bar 131 is one. However, in other embodiments, the assembly bar 131 can be more than one. When more than one assembly bars 131 are used, each assembly bar 131 can be interconnected or separate.

Alternatively, according to design requirement of the display device 200, the assembly bars 131 can be replaced by the supporting bars 111 as shown in Fig. 1A. In other words, the assembly frame set 130 may be absent in the display device 200.

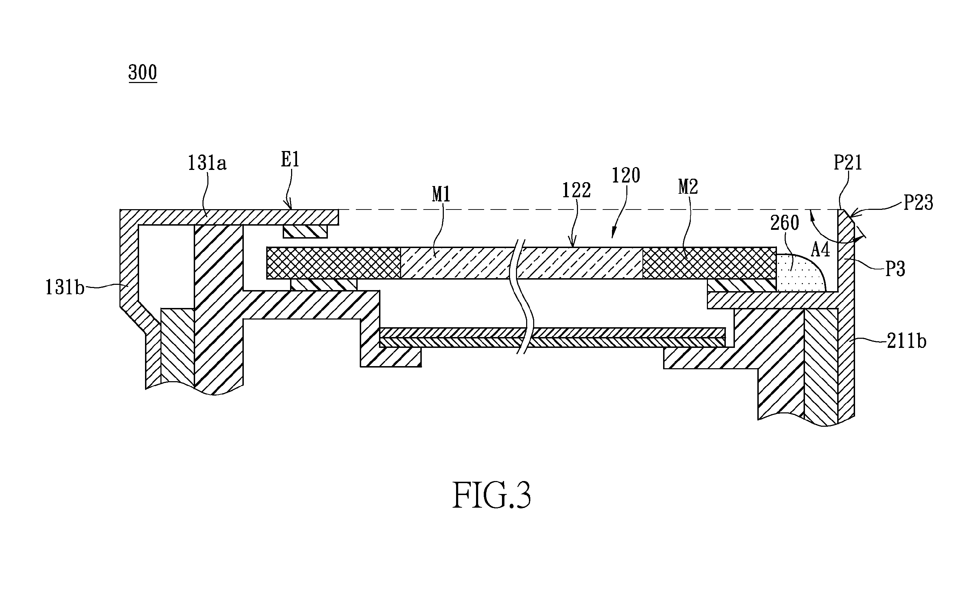

Fig. 3 is a schematic top view of a display device in accordance with a third embodiment of the instant disclosure. The third embodiment shows a display device 300 formed in a similar manner as the display device 200. The display device 300 includes a backlight module and the light assembly can be 172 or 272. The difference between the second and third embodiments arises from an upper portion P3 of the third embodiment and the upper portion P1 of the second embodiment.

Since the third embodiment is almost the same as the second embodiment except for the difference described above, Fig. 3 illustrates the difference thereof and the specifics of the same will be omitted so as to avoid overlaps. The difference is further described herein.

Please refer to Fig. 3. The upper portion P3 of the first wall 211b has a top face P21 and a slope P23. The top face P 21 and slope P23 define an included angle A4 which is larger than 90°. The width of the top face P21 ranges of 0.5 mm to 3 mm. Additionally, the top cover 131a has a top cover face E1. The top face P21 is the peak of the upper portion P3 and co-planar with the top cover face E1 as shown in Fig. 3.

It is worth mentioned that in the third embodiment, the upper portion P3 of the first wall 211b has the top face P21 and slope P23 yet in other embodiments, the slope P23 can be omitted from the upper portion P3 of the first wall 211b. The upper portion P3 is an exemplary embodiment and the instant disclosure is not limited thereto.

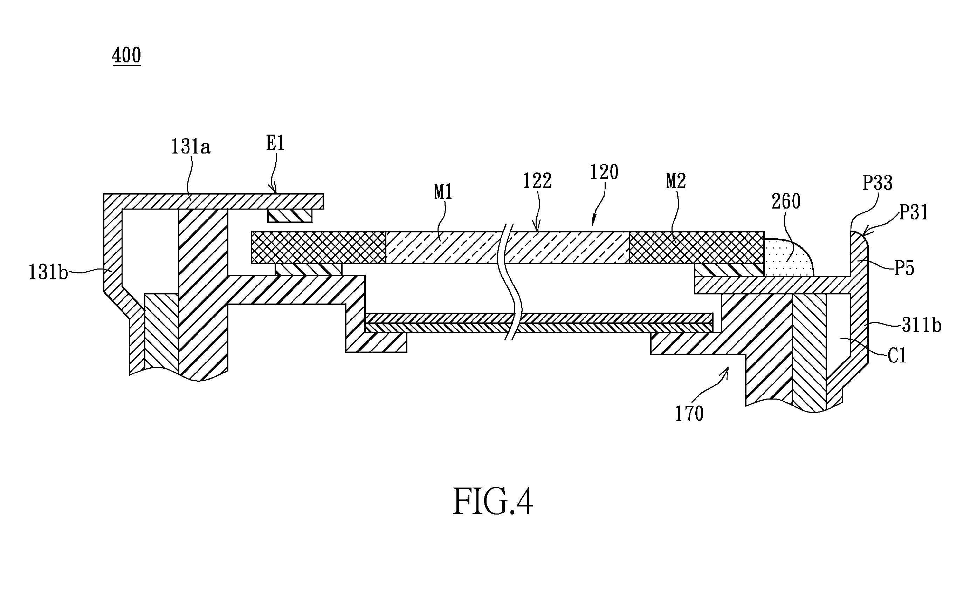

Fig. 4 is a schematic top view of a display device in accordance with a fourth embodiment of the instant disclosure. The fourth embodiment shows a display device 400 formed in a similar manner as the display device 300. The display device 400 includes backlight module and the light assembly can be 172 or 272. The difference between the third and fourth embodiments arises from an upper portion P5 of the fourth embodiment and the upper portion P3 of the third embodiment.

Since the fourth embodiment is almost identical to the third embodiment except for the difference described above, Fig. 4 illustrates the difference thereof and the specifics of the same will be omitted so as to avoid overlaps. The difference is further described herein.

Please refer to Fig. 4. The upper portion P5 may not approach the backlight module 170. Instead, a gap C1 is formed between the upper portion P5 and the backlight module 170. In addition, the first wall 311b of the upper portion P5 has a top face P31, which is a slanting curved face and has a top edge P33 at the peak of the upper portion P5. In addition, the top edge P33 of the top face P31 is flush with the plane 122. In other words, the peak edge of the upper portion P5 is co-planar with the plane 122. The display area M1 is exposed from the plane 122.

The top face P31 is a slanting curved face in the fourth embodiment shown in Fig. 4. However, in other embodiments, the top face P31 can be a slanting flat face and still the top edge P33 of the top face P31 is flush with the plane 122. The structure of the top face P31 shown in Fig. 4 is an exemplary embodiment and the instant disclosure is not limited thereto.

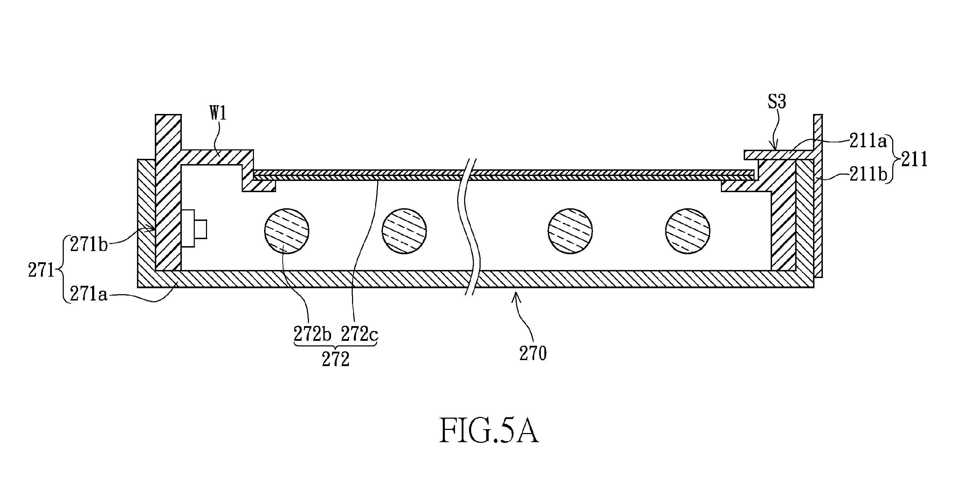

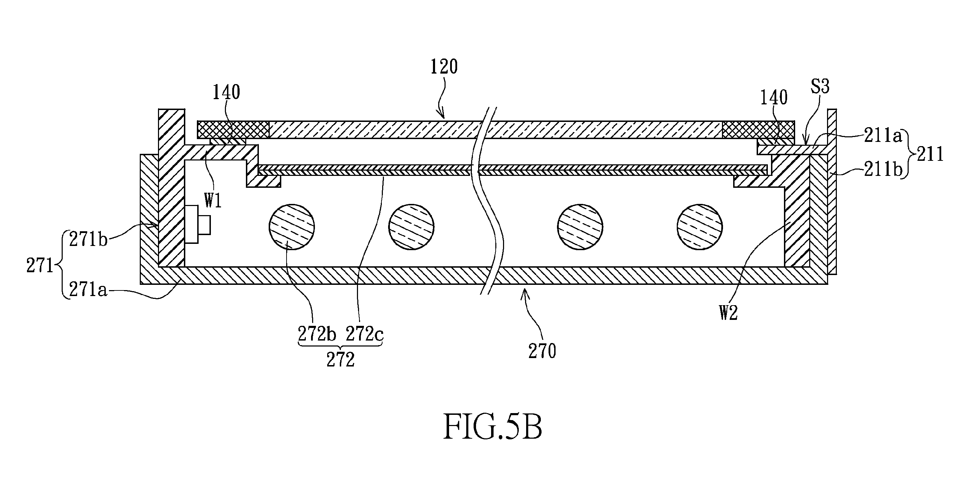

The above description introduces the display devices 100, 200, 300 and 400 with a study of Figs. 1A to 4. Please refer to Figs. 5A and 5B for a method of assembling one of the embodiments. The display devices 100, 200, 300 and 400 are assembled in an identical manner and therefore the description hereafter takes the second embodiment, display device 200, as an example.

Figs. 5A and 5B are schematic diagrams showing steps of assembling the display device in Fig. 2A. Please refer to Fig. 5A. In the method of assembling the display device 200, firstly the supporting bars 211 and backlight module 270 are connected. The first wall 211b connects the backlight module 270. The connection means can be fasteners, tenon or adhesives. Alternatively, in the instant embodiment, the supporting bars 211 can connect the shield 271a or the holder 271b.

Please refer to Fig. 5B. Subsequently, the attachment layer 140 is formed on the supporting face S3 and the supporting member W1 of the holder 271b. The attachment layer 140 can be secured on the supporting face S3 and supporting member W1 by double-sided tape. Note that the first frame set 210 includes only the supporting bars 211 whereas the holder 271b may not have any supporting member W1. Thus the first frame set 210 can support the display panel 120 alone. When the holder 271b does not have any supporting member W1, the attachment layer 140 may be formed on the supporting bars 211 instead of the supporting member W1.

Then, the display panel 120 is disposed on the attachment layer 140 to establish the bond among the display panel 120, supporting portion 211a and supporting member W1. Thus, the display panel 120 is secured above the backlight module 270. So far, assembly of the display device 200 basically is complete.

Please refer to Fig. 2B again. After the attachment layer 140 connects the display panel 120 and supporting bars 211, the fixing adhesives 260 is formed on the supporting face S3. The fixing adhesives 260 bond the display panel 120 and the supporting portion 211a. The fixing adhesives 260 can be coated on the supporting face S3 by a paste dispenser and the instant disclosure is not limited thereto.

After the formation of the fixing adhesives 260, the assembly frame set 130 and the backlight module 270 are connected and the top cover 131a partially shields the display panel 120. The second wall 131b and the backlight module 270 are connected by fasteners, tenon or adhesives. In the instant embodiment, the second wall 131b can connect to the shield 271a or the holder 271b. Alternatively, before the connection of the assembly bars 131 and the backlight module 270, the buffer layer 150 can be formed on the top cover 131a. Foam tapes or the like can be used to allow attachment of the buffer layer 150 on the top cover 131a.

In the instant embodiment, the assembly frame set 130 is an optional element. Thus the method of assembling the display device may omit the step of connecting the assembly frame set 130 and the backlight module 270. Furthermore, the formation of the fixing adhesives 260 may be carried out after the connection of the assembly frame set 130 and the backlight module 270. The formation of the fixing adhesives 260 and the connection between the assembly frame set 130 and the backlight module 270 are sequentially interchangeable and the instant disclosure is not limited thereto.

In conclusion, the display panel attaches to the first frame set via the attachment layer and the supporting bars support the display panel. The display and non-display areas of the display panel are not covered. In other words, the first frame set is well hidden and invisible to viewers. Therefore, compared to prior art, the appearance frame does not cover the front frame along the periphery of the display area for allowing more flexibility in product design. A broader variety of appearance is available to the display panel thus promoting aesthetic features.

The descriptions illustrated supra set forth simply the preferred embodiments of the instant disclosure; however, the characteristics of the instant disclosure are by no means restricted thereto. All changes, alternations, or modifications conveniently considered by those skilled in the art are deemed to be encompassed within the scope of the instant disclosure delineated by the following claims.

**Claims**

1. A display device (100, 200, 300, 400) comprising:

   a display panel (120) having a display area (M1) and a side plane (121);
   a backlight module (170, 270);
   a first frame set (110, 210) disposed at a periphery of the backlight module (170, 270) and comprising at least one supporting bar (111, 211) ;
   wherein the supporting bar (111, 211) is disposed between the display panel (120) and the backlight module (170, 270), and the supporting bar (111, 211) comprises a first wall (111b, 211b, 311b) and a supporting portion (111a, 211a, 311a);
   wherein the supporting portion (111a, 211a, 311a) has a supporting face (S1, S3) and a bottom face (S2, S4) opposing the supporting face (S1, S3);

wherein the display panel (120) is disposed above the supporting face (S1, S3) while the first wall (111b, 211b, 311b) extends from the bottom face (S2, S4) toward the backlight module (170, 270); and
at least one attachment layer (140) bonding the display panel (120) and the supporting face (S1, S3).

2. The display device (100, 200, 300, 400) according to claim 1, wherein the supporting face (S1, S3) has:

   an inner edge (S11) covered by the display panel (120); and
   an outer edge (S12) opposing to the inner edge (S11), wherein the side plane (121) is located between the inner edge (S11) and the outer edge (S12);
   wherein the distance (A) between the side plane (121) and the display area (M1), the distance (A) between the side plane (121) and the outer edge (S12), and the width (D) of the supporting face (S1, S3) between the inner edge (S11) and the outer edge (S12) all satisfy the equation:

$$0.35 \leq \frac{D}{A+B} \leq 0.75$$

   wherein A refers to the distance between the side plane (121) and display area (M1);
   B refers to the distance between the side plane (121) and outer edge (S12); and
   D refers to the width of supporting face (S1, S3) measured from the inner edge (S11) to outer edge (S12).

3. The display device (100, 200, 300, 400) according to claim 2, wherein the first wall (111b, 211b, 311b) has an external face (S5) connecting to the outer edge (S12) of the supporting face (S1, S3).

4. The display device (100, 200, 300, 400) according to claim 1, wherein the supporting face (S1, S3) has:

   an inner edge (S11) covered by the display panel (120); and
   an outer edge (S12) opposing to the inner edge (S11), wherein the side plane (121) is located between the inner (S11) and outer (S12) edge s;
   wherein the distance (A) between the side plane (121) and the display area (M1); the distance (B) between the side plane (121) and the outer edge (S12), and the width (D) of the supporting face (S1, S3) between the inner edge (S11) and the outer edge (S12) all satisfy the equation:

$$0.35 \leq \frac{D}{A+B} \leq 0.8$$

wherein A refers to the distance between the side plane (121) and display area (M1);
B refers to the distance between the side plane (121) and outer edge (S12); and
D refers to the width of supporting face (S1, S3) measured from the inner edge (S11) to outer edge (S12).

5. The display device (100, 200, 300, 400) according to claim 1, wherein the first wall (111b, 211b, 311b) includes an upper portion (P1, P3, P5) and a lower portion (P2), the upper portion (P1, P3, P5) juts out of the supporting face (S1, S3) and has a top face (P11, P21, P31) and an inner flat face (P12), the inner flat face (P12) and the supporting face (S1, S3) meet at the outer edge (S12), and the lower portion (P2) extends from the bottom face (S2, S4) toward the backlight module (170, 270).

6. The display device (100, 200, 300, 400) according to claim 1, wherein the plurality of the attachment layer (140)s covers the supporting face (S1, S3) separately and bonds the plurality of the supporting bar (111, 211)s and the display panel (120).

7. The display device (100, 200, 300, 400) according to claim 6, wherein the supporting bars (111, 211) are interconnected.

8. The display device (100, 200, 300, 400) according to claim 6, wherein the supporting bars (111, 211) are separate from each other.

9. The display device (100, 200, 300, 400) according to claim 5, wherein the top face (P11, P21, P31) is flush with a plane (122) of the display panel (120), and the display area (M1) is exposed from the plane (122).

10. The display device (100, 200, 300, 400) according to claim 1 further comprising an assembly frame set (130) and a buffer layer (150), the assembly frame set (130) comprising at least one set of assembly bars (131) comprising a second wall (131b) and a top cover (131a) connecting to the second wall (131b), wherein the display panel (120) is disposed between the backlight module (170, 270) and top cover (131a), and the buffer layer (150) is disposed between the display panel (120) and top cover (131a).

11. The display device (100, 200, 300, 400) according to claim 5 further comprising an assembly frame set (130) and a buffer layer (150), the assembly frame set (130) comprising at least one set of assembly bars (131), each of the assembly bar having a second wall (131b) and a top cover (131a) connecting to the second wall (131b), wherein the display panel (120) is disposed between the backlight module (170, 270) and the top cover (131a) while the buffer layer (150) is disposed between the display panel (120) and the top cover (131a).

12. The display device (100, 200, 300, 400) according to claim 11, wherein the top face (P11, P21, P31) is flush with a top cover (131a) face of the top cover (131a) substantially.

13. The display device (100, 200, 300, 400) according to claim 1 further comprising at least one top cover (160, 260) disposed on the supporting face (S1, S3), wherein the top cover (160, 260) bonds the supporting portion (111a, 211a, 311a) and the side plane (121).

14. The display device (100, 200, 300, 400) according to claim 1, wherein the backlight module (170, 270) comprises:

    a frame set (171) connecting to the first wall (111b, 211b, 311b); and
    a light assembly (172, 272) disposed in the frame set (171).

15. The display device (100, 200, 300, 400) according to claim 14, wherein the frame set (171) comprises:

    a shield (171a, 271a); and
    a holder (171b, 271b) combining with the shield (171a, 271a), the light assembly (172, 272) disposed on the holder (171b, 271b), wherein the holder (171b, 271b) includes at least one upporting member (W1) and a second frame set (W2), the display panel (120) is disposed above the upporting member (W1) and the second frame set (W2) is located between the first frame set (110, 210) and the light assembly (172, 272).

16. The display device (100, 200, 300, 400) according to claim 15, wherein the plurality of the attachment layer (140)s covers the supporting face (S1, S3) separately and bonds the plurality of the supporting bar (111, 211)s and the display panel (120).

17. A method of assembling display device (100, 200, 300, 400), comprising:

    connecting at least one supporting bar (111, 211) and a backlight module (170, 270), wherein the supporting bar (111, 211) includes a first wall (111b, 211b, 311b) and a supporting portion (111a, 211a, 311a) connecting to the first wall (111b, 211b, 311b), and the supporting portion (111a, 211a, 311a) has a supporting face (S1, S3);

forming at least one attachment layer (140) on the supporting face (S1, S3); and

disposing a display panel (120) on the attachment layer (140) to allow the attachment layer (140) to bond the display panel (120) and the supporting portion (111a, 211a, 311a).

18. The method of assembling display device (100, 200, 300, 400) according to claim 17, wherein after disposing the display panel (120) on the attachment layer (140) further comprises:

forming at least one top cover (160, 260) on the supporting face (S1, S3) to allow the top cover (160, 260) to bond the display panel (120) and the supporting portion (111a, 211a, 311a).

19. The method of assembling display device (100, 200, 300, 400) according to claim 17, wherein after the step of disposing the display panel (120) on the attachment layer (140) further comprises:

connecting the at least one assembly bar to the backlight module (170, 270) to allow the top cover (131a) to partially cover the display panel (120).

<u>100</u>

FIG.1A

FIG. 1B

EP 2 680 063 A1

FIG.1C

200

210

120  120  Q  P31  S3

260

121

E1

Q

130

FIG.2A

FIG.2B

EP 2 680 063 A1

200

210

211

211 211

121

121 120 121

130

131 121

FIG.2C

300

FIG.3

EP 2 680 063 A1

400

131a    E1

131b

M1    122    120    M2    260    P33    P31    P5

311b    C1

170

FIG.4

FIG.5A

FIG.5B

EP 2 680 063 A1

Europäisches
Patentamt

European
Patent Office

Office européen
des brevets

**EUROPEAN SEARCH REPORT**

Application Number

EP 13 17 3495

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/261282 A1 (JEAN KI NAM [KR] ET AL) 27 October 2011 (2011-10-27) * the whole document * | 1-19 | INV. G02F1/1333 H05K5/02 |
| X | US 2011/236643 A1 (TSUBOUCHI MIKIHIKO [JP] ET AL) 29 September 2011 (2011-09-29) * abstract; figures 2-7 * * paragraph [0035] - paragraph [0110] * | 1-19 | |
| X | US 2011/128464 A1 (OOHIRA EIJI [JP]) 2 June 2011 (2011-06-02) * the whole document * | 1-19 | |
| X | US 2012/050640 A1 (YASUI YOICHI [JP] ET AL) 1 March 2012 (2012-03-01) * the whole document * | 1-19 | |
| A | US 2011/002112 A1 (HSU SHIH-CHIEH [TW] ET AL) 6 January 2011 (2011-01-06) * the whole document * | 1-19 | |

TECHNICAL FIELDS
SEARCHED      (IPC)

G02F
H05K

The present search report has been drawn up for all claims

| Place of search | Date of completion of the search | Examiner |
|---|---|---|
| Munich | 14 October 2013 | Lutz, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 17 3495

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2013

| Patent document cited in search report | | Publication date | Patent family member(s) | | Publication date |
|---|---|---|---|---|---|
| US 2011261282 | A1 | 27-10-2011 | CN | 102236181 A | 09-11-2011 |
| | | | TW | 201137447 A | 01-11-2011 |
| | | | US | 2011261282 A1 | 27-10-2011 |
| US 2011236643 | A1 | 29-09-2011 | CN | 102224445 A | 19-10-2011 |
| | | | JP | 2010128155 A | 10-06-2010 |
| | | | KR | 20110097759 A | 31-08-2011 |
| | | | TW | 201037395 A | 16-10-2010 |
| | | | US | 2011236643 A1 | 29-09-2011 |
| | | | WO | 2010061761 A1 | 03-06-2010 |
| US 2011128464 | A1 | 02-06-2011 | JP | 2011118114 A | 16-06-2011 |
| | | | US | 2011128464 A1 | 02-06-2011 |
| US 2012050640 | A1 | 01-03-2012 | JP | 2012047913 A | 08-03-2012 |
| | | | US | 2012050640 A1 | 01-03-2012 |
| US 2011002112 | A1 | 06-01-2011 | TW | 201102703 A | 16-01-2011 |
| | | | US | 2011002112 A1 | 06-01-2011 |
| | | | US | 2013227829 A1 | 05-09-2013 |

EPO FORM P0459

For more details about this annex : see Official Journal of the European Patent Office, No. 12/82